# EUROPEAN PATENT APPLICATION

(11) **EP 2 790 184 A1**
(43) Date of publication of application: **15.10.2014**
(21) Application number: 12855482.1
(22) Date of filing: 28.11.2012
(51) Int. Cl.: G10L 25/54, G10L 15/10, G10L 19/00, G10L 21/007, G10L 21/043, G06F 17/30, G10K 15/04

(54) **SOUND PROCESSING DEVICE, SOUND PROCESSING METHOD, PROGRAM, RECORDING MEDIUM, SERVER DEVICE, SOUND REPLAY DEVICE, AND SOUND PROCESSING SYSTEM**

(30) Priority: 05.12.2011 JP 2011266065
(71) Applicant: Sony Corporation, Tokyo 108-0075 (JP)
(72) Inventor: TSUNOO, Emiru, Tokyo 108-0075 (JP); INOUE, Akira, Tokyo 108-0075 (JP)
(74) Representative: Ealey, Douglas Ralph
(86) International application number: PCT/JP2012/080789
(87) International publication number: WO 2013/084774

(57) **Abstract**

To preferably identify a piece of music corresponding to an input sound signal.

Continuous input sound signals are converted into a predetermined characteristic amount sequence. A checking process of the characteristic amount sequence against music information is sequentially executed when a predetermined quantity of the characteristic amount sequence is accumulated and a piece of music having a matching degree greater than a threshold value is conclusively identified. In this case, since the conversion of the continuous input sound signals into a predetermined characteristic amount sequence and the execution of the checking process of the characteristic amount sequence against music information are executed in parallel, a music identification having a great real-time ability can be performed.

## Description

### TECHNICAL FIELD

The present technology relates to a sound processing device, a sound processing method, a program, a recording medium, a server device, a sound reproducing device, and a sound processing system, and more particularly, a sound processing device and the like used to preferably identify a piece of music corresponding to an input sound signal.

### BACKGROUND ART

For a case that a user reproduces a piece of music from a huge amount of pieces of music, a singing and humming search has been proposed as a method for easily searching the piece of music (for example, see Patent Document 1).

### CITATION LIST

### PATENT DOCUMENT

Patent Document 1: Japanese Patent Application Laid-Open No. 2000-356996

### SUMMARY OF THE INVENTION

### PROBLEMS TO BE SOLVED BY THE INVENTION

According to a search system described in Patent Document 1, a search process starts after a user sings (or hums). The system thus lacks real-time ability.

An object of the present technology is to enables a preferable identification of a piece of music corresponding to an input sound signal.

### SOLUTIONS TO PROBLEMS

An aspect of the present technology is a sound processing device including:
a converting unit configured to convert continuous input sound signals into a predetermined characteristic amount sequence; and
a music identifying unit configured to sequentially execute a checking process of the characteristic amount sequence against music information when a predetermined quantity of the predetermined characteristic amount sequence is accumulated, and identify a piece of music having a matching degree greater than a first threshold value.

Regarding the present technology, the converting unit converts the continuous input sound signals into a predetermined characteristic amount sequence. The continuous input sound signals are, for example, obtained by inputting user's singing voice (including humming), environmental sound, or the like via a microphone. The characteristic amount sequence is described as, for example, a pitch sequence but may be other sequences such as a phonological sequence or the like.

The music identifying unit sequentially executes the checking process of the characteristic amount sequence against music information when a predetermined quantity of the predetermined characteristic amount sequence is accumulated. After that, the music identifying unit identifies the piece of music having a matching degree greater than the first threshold value. For example, the checking process is executed at every scheduled time or every time a previous checking process ends.

In this manner, regarding the present technology, an conversion of continuous input sound signals into a predetermined characteristic amount sequence and an execution of the checking process of characteristic amount sequence against music information are executed in parallel. This enables a music identification with a great real-time ability.

Here, regarding the present technology, for example, the music identifying unit may remove pieces of music having matching degrees in a previous checking process smaller than a second threshold value, which is set smaller than the first threshold value, from the target of the checking process. In this case, the target of the checking process can be sequentially narrowed down as time passes and the music identification can be performed more efficiently.

Further, regarding the present technology, for example, the music identifying unit may change the first threshold value and/or the second threshold value larger as time passes. In this case, without removing a piece of music, which is corresponding to the continuous input sound signals, from the target of the checking process, the piece of music can be accurately identified.

Further, for example, the present technology may further include a music reproducing unit configured to reproduce the identified piece of music in synchronization with the continuous input sound signals based on information about the piece of music and the music part being sung. In this case, for example, an effective application can be provided so that the user can comfortably continue to sing along the reproduced piece of music. In this case, for example, the music reproducing unit may change the pitch and pace of the reproduced piece of music according to the pitch and pace of the continuous input sound signals.

Further, for example, the present technology may further include a display control unit configured to control a display of a music identification progress state based on information of the checking process and information of the music identification. In this case, the user can easily find the music identification progress state. For example, the display control unit may control to display pieces of music as the target of the checking process in descending order of the matching degree based on the process result. The user can easily recognize which piece of music is going to be identified.

In this case, there may be further included a music reproducing unit configured to reproduce a piece of music selected from the displayed pieces of music in synchronization with the continuous input sound signals based on information about the piece of music and the music part being sung.

In this case, the user can select a piece of music corresponding to the user's singing and the piece of music can be immediately reproduced in synchronization.

Further, for example, the present technology may further include a music narrow-down unit configured to select some pieces of music from plural pieces of music to which a predetermined sorting is executed, and the music identifying unit may target the some pieces of music, which are selected in the music narrow-down unit, in the checking process. For example, the predetermined sorting can be sorting by categories and artists, sorting by frequency of listening, or sorting by whether or not the music is user's favorite, or the like. In this case, the target of the checking process can be narrowed down and the accuracy of the music identification can be improved. Further, since unnecessary checking process can be omitted, time required to identify music is shortened.

In addition, another aspect of the present technology is a sound processing system including a sound reproducing device and a server device which are connected via a network, wherein
the sound reproducing device including:
a converting unit configured to convert continuous input sound signals into a predetermined characteristic amount sequence;
a transmission unit configured to transmit the predetermined characteristic amount sequence to the server device;
a reception unit configured to receive music identification information from the server device; and
a music reproducing unit configured to reproduce the identified piece of music in synchronization with the continuous input sound signals based on the music identification information, and
the server device including:
a reception unit configured to receive the predetermined characteristic amount sequence from the sound reproducing device;
a music identifying unit configured to sequentially execute a checking process of the characteristic amount sequence against music information when a predetermined quantity of the predetermined characteristic amount sequence is accumulated, and identify a piece of music having a matching degree greater than a threshold value; and
a transmission unit configured to transmit the music identification information to the sound reproducing device.

The present technology is the sound processing system in which the sound reproducing device and the server device are connected via a network. In the sound reproducing device, the converting unit converts continuous input sound signals into a predetermined characteristic amount sequence and the transmission unit transmits the predetermined characteristic amount sequence to the server device.

In the server device, the reception unit receives the predetermined characteristic amount sequence from the sound reproducing device, the music identifying unit sequentially executes the checking process of the characteristic amount sequence against music information when a predetermined quantity of predetermined characteristic amount sequence is accumulated and identifies a piece of music having a matching degree greater than the threshold value, and the transmission unit transmits the music identification information to the sound reproducing device.

Then, in the sound reproducing device, the reception unit receives the music identification information from the server device and the music reproducing unit reproduces the identified piece of music in synchronization with the continuous input sound signals based on the music identification information.

In this manner, regarding the present technology, since the conversion of the continuous input sound signals into a predetermined characteristic amount sequence and the execution of the checking process of the characteristic amount sequence against music information are executed in parallel, a music identification with a great real-time ability can be performed. Further, regarding the present technology, based on user's singing (including humming), the piece of music corresponding to the singing can be reproduced in synchronization and the user of the sound reproducing device can comfortably continue to sing along the reproduced piece of music. Further, according to the present technology, since the server device executes the processes of music identification including the checking process, the process load in the sound reproducing device can be reduced.

### EFFECTS OF THE INVENTION

The present technology enables a preferable identification of a piece of music corresponding to an input sound signal.

### BRIEF DESCRIPTION OF DRAWINGS

Fig. 1 is a block diagram illustrating a configuration example of a sound processing device as a first embodiment.
Fig. 2 is a timing diagram illustrating timings in a pitch detection process and a checking process in a case that the checking process is executed when a previous checking process ends.
Fig. 3 is a timing diagram illustrating timings in a pitch detection process and a checking process in a case that the checking process is executed at every scheduled time.
Fig. 4 is a diagram used to explain a configuration in which a threshold value Thh and a threshold value Thl become larger as time passes.
Fig. 5 is a diagram illustrating an example of display transitions on a display unit.
Fig. 6 is a flowchart used to explain operation of the sound processing device in a case that the checking process is executed every time a previous checking process ends.
Fig. 7 is a flowchart used to explain operation of the sound processing device in a case that the checking process is executed at every scheduled time.
Fig. 8 is a flowchart used to explain operation of the sound processing device including a function that allows a user to select a piece of music.
Fig. 9 is a block diagram illustrating a configuration example of a sound processing system as a second embodiment.
Fig. 10 is a timing diagram illustrating timings in respective processes of detecting pitch, transmitting, receiving, and checking in the sound processing system.

### MODE FOR CARRYING OUT THE INVENTION

A configuration to realize the invention (hereinafter, referred to as an "embodiment") will be explained. Here, the explanation will be made in the following order.
1. First embodiment
2. Second embodiment
3. Modification

### <1. First embodiment>

### [Configuration example of sound processing device]

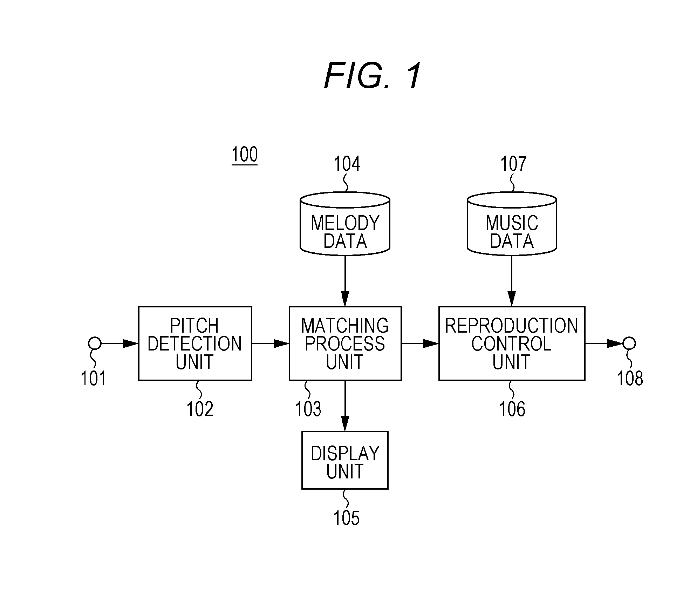

Fig. 1 illustrates a configuration example of a sound processing device 100 as a first embodiment. In more detail, the sound processing device 100 is a portable music player, a mobile phone, or the like which has a microphone. The sound processing device 100 has an input unit 101, a pitch detection unit 102, a matching process unit 103, a storage unit 104, a display unit 105, a reproduction control unit 106, a storage unit 107, and an output unit 108.

The input unit 101 inputs singing voice (including humming) of a user and outputs an input sound signal (voice signal) corresponding to the singing voice. The input unit 101 is composed of a microphone and the like, for example. The pitch detection unit 102 analyzes frequency of the input sound signal and detects pitch by estimating a basic frequency at every analysis time.

The storage unit 107 stores data of a predetermined number of pieces of music and composes a music database. The storage unit 104 stores melody data corresponding to music stored in the storage unit 107 and composes a melody database. Here, the melody data does not always have to correspond to music data on a one-to-one basis, and melody data of plural parts within a piece of music may be stored as separate data. For example, melody data of one piece of music may be stored as three divided melody data including Melody A, Melody B and Main Melody.

The matching process unit 103 executes a checking process (matching process of a pitch sequence detected in the pitch detection unit 102 against the melody data of the respective pieces of music stored in the storage unit 104 and calculates a matching degree between the pitch sequence and the melody data of the respective pieces of music. The matching process unit 103, for example, normalizes the pitch sequence as a pitch line, extracts a pitch difference of sound in a previous sequence, and executes a checking process (matching process) using a sequence of melody data and dynamic programming. However, the checking process in the matching process unit 103 is not limited to this method.

The matching process unit 103 executes this checking process when a predetermined quantity of pitch sequence is accumulated and conclusively identifies a piece of music having a matching degree that is the largest and is greater than a predetermined threshold value (first threshold value) Thh. In this case, the matching process unit 103 removes, from the target of the checking process, a piece of music whose matching degree in a previous checking process is smaller than a threshold value (second threshold value) Thl. Here, the threshold value Thl is a value set lower than the threshold value Thh and previously set as a value corresponding to adequately small matching degrees. In this case, since the target of the checking process is sequentially narrowed down as time passes, efficiency of identifying music is improved.

The matching process unit 103 repeats the checking process as described above. For example, the matching process unit 103 executes the checking process every time a previous checking process ends. In this case, since the checking process is sequentially executed, it is expected that the time required to identify music is shortened.

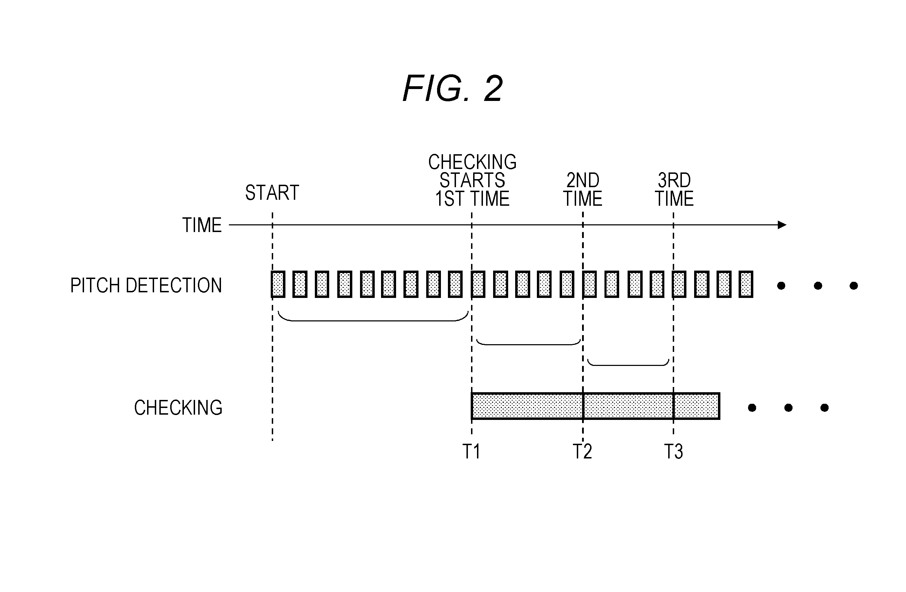

Fig. 2 illustrates a timing diagram of the above case. In the pitch detection unit 102, a pitch detection of input sound signals is sequentially executed from the start time. At time T1, in the matching process unit 103, a first checking process starts. In the first checking process, the checking process is executed based on the pitch sequence accumulated from the start time to time T1.

At time T2 when the first checking process ends, in the matching process unit 103, a second checking process starts immediately. In this second checking process, the checking process is executed based on the pitch sequence accumulated from time T1 to time T2. Further, at time T3 when the second checking process ends, in the matching process unit 103, a third checking process starts immediately. In this third checking process, the checking process is executed based on the pitch sequence accumulated from time T2 to time T3.

Hereinafter, the checking process is repeated in the same manner. Here, as described above, since a piece of music having a matching degree smaller than the threshold value (second threshold value) Thl in the previous checking process is removed from the target of the checking process, time required for the checking process is shortened each time the checking process is executed, as illustrated in the figure.

Further, for example, the matching process unit 103 executes the checking process at every scheduled time. In this case, since the checking process is executed based on the pitch sequence in an adequate length regardless of the time required in the previous checking process, it is expected that each checking process is executed effectively.

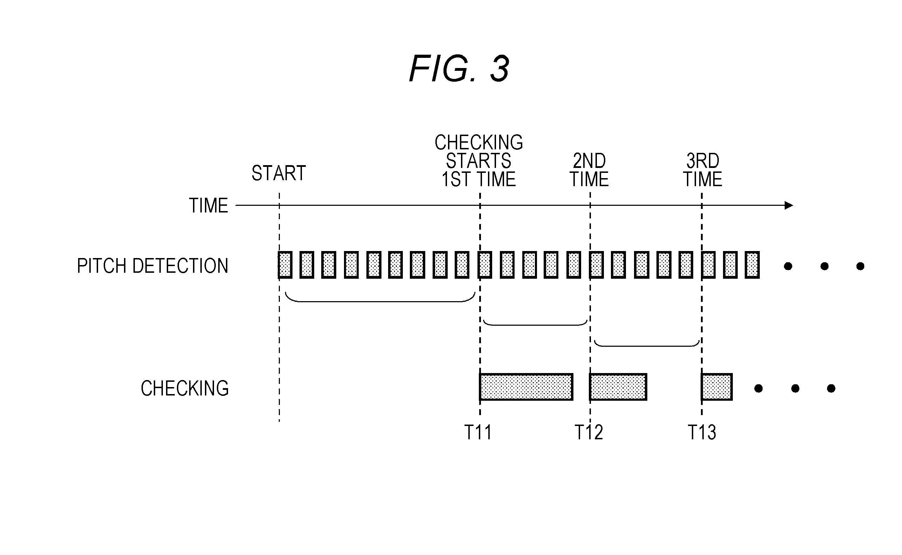

Fig. 3 illustrates a timing diagram of the above case. In the pitch detection unit 102, a pitch detection of input sound signals is continuously executed from the start time. At time T11, in the matching process unit 103, a first checking process starts. In this first checking process, the checking process is executed based on a pitch sequence accumulated from the start time to time T11.

At time T12 after the first checking process ends, in the matching process unit 103, a second checking process starts. In this second checking process, a checking process is executed based on a pitch sequence accumulated from time T11 to time T12. Further, at time T13 after the second checking process ends, in the matching process unit 103, a third checking process starts. In this third checking process, a checking process is executed based on a pitch sequence accumulated from time T12 to time T13.

After that, the checking process is repeated in the same manner. Here, as described above, since a piece of music having a matching degree smaller than the threshold value (second threshold value) Thl in a previous checking process is removed from the target of the checking process, the time required for the checking process is shortened each time the checking process is executed, as illustrated in the figure.

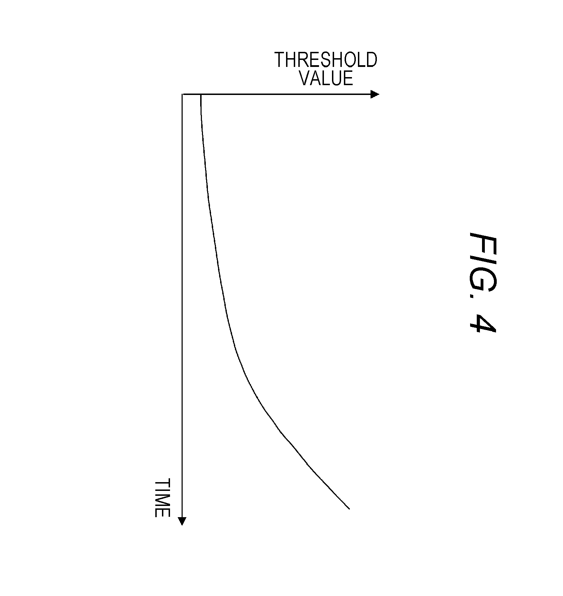

The threshold value Thh and threshold value Thl may be fixed values, or one of them or both of them may become larger as time passes as illustrated in Fig. 4. When the threshold value is changed in this manner, it becomes possible to accurately identify a piece of music corresponding to the input sound signals without removing it from the target of the checking process. Further, for example, the threshold value Thh may be set based on a matching degree of another piece of music such as a value in which a certain value is added to the second largest matching degree.

Further, in the checking process, the matching process unit 103 may target all pieces of music stored in the storage unit 107 in a checking process from the beginning, or may target the pieces of music to which a predetermined sorting (classifying) is executed, which are, for example, some pieces of music selected by a user operation or the like in advance. In this case, since the target of the checking process can be narrowed down, the accuracy of the music identification can be improved. Further, since a useless checking process does not have to be executed, the time to identify a piece of music can be shortened.

Here, sorting adaptive to user's taste can be considered. For example, there may be sorting by categories and artists. Further, there may be sorting by frequency of listening, sorting based on whether or not the music is user's favorite, or the like. Here, regarding the selection of a part of pieces of music, in addition to the case by the user's operation, for example, in a case of sorting by frequently listened pieces of music, a predetermined number of top pieces of music may be automatically selected as the target of the checking process. Further, it may allow the user select whether to target all pieces of music in the checking process or whether to target selected pieces of music in the checking process, in advance.

The display unit 105 displays a progress state of the music identification based on checking process information and music identification information in the matching process unit 103. The display unit 105 displays pieces of music as the target of the checking process in descending order of the matching degree, for example. Since the target of the checking process reduces as the checking process is repeated as described above, the display of the display unit 105 changes accordingly. Then, when a piece of music is identified in the matching process unit 103, information of the piece of music is displayed on the display unit 105.

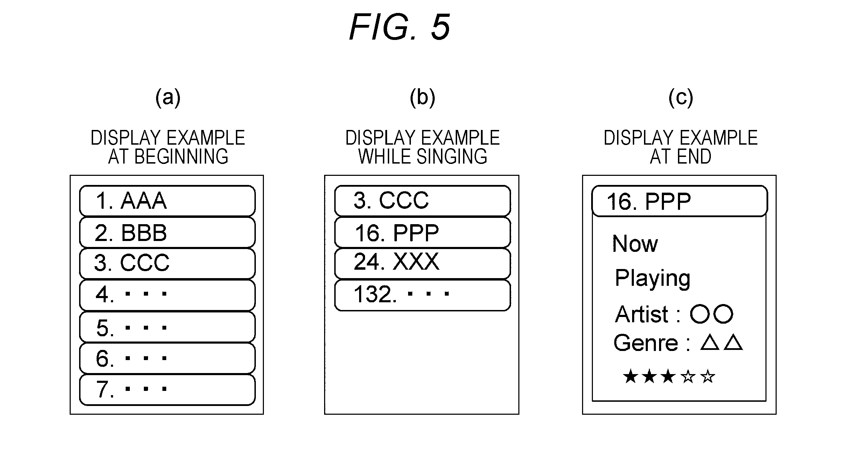

Fig. 5 illustrates an example of transitions of the display on the display unit 105. Fig. 5(a) illustrates a display example at the start time. Since the pieces of music as the target of the checking process are not narrowed down at this timing, many pieces of music are displayed. Fig. 5(b) illustrates a display example during singing. Since the pieces of music as the target of the checking process are narrowed down at this timing, the number of displayed pieces of music is reduced. In this case, they are displayed in descending order of the matching degree. In the example illustrated in the figure, "3. CCC" has the greatest matching degree. Here, at this point, there is not a piece of music having a matching degree greater than the threshold value Thh, yet. Fig. 5(c) is a display example at the end that a piece of music is conclusively identified. In this case, the piece of music, "16. PPP," is identified.

When a piece of music is identified in the matching process unit 103, the reproduction control unit 106 reproduces the identified piece of music in synchronization with the input sound signals by using the music data stored in the storage unit 107 based on information about the piece of music and the music part being sung. In other words, the reproduction control unit 106 reproduces the identified piece of music in synchronization with the music part being sung by the user. Because of this synchronized reproduction, the user can continue to sing along with the reproduced piece of music comfortably.

Here, instead of simply reproducing the identified piece of music, the reproduction control unit 106 may change the pitch and pace of the reproduced piece of music corresponding to the pitch and pace of the input sound signal, that is, the pitch and pace of user's singing.

The output unit 108 is a part related to an output of a reproduction voice signal of piece of music obtained in the reproduction control unit 106. The output unit 108 may output sound itself like a speaker, may be a terminal to be connected to headphones, or may be a communication unit for communicating with an external speaker.

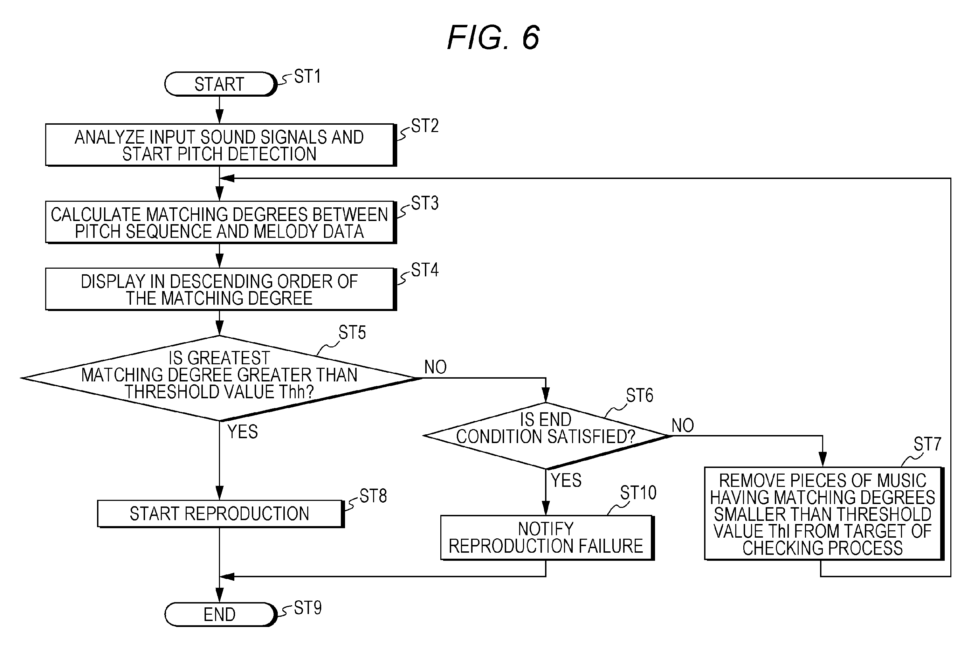

Next, operation of the sound processing device 100 illustrated in Fig. 1 will be explained. Firstly, with reference to a flowchart in Fig. 6, a case that a checking process is executed every time a previous checking process ends will be explained. The sound processing device 100 starts a process in step ST1 and proceeds to a process in step ST2. In step ST2, in the sound processing device 100, the pitch detection unit 102 executes a frequency analysis of the input sound signals form the input unit 101 and starts to estimate a basic frequency and detect pitch at every analysis time.

Next, in step ST3, the sound processing device 100 executes a checking process in the matching process unit 103. In this case, the sound processing device 100 executes a checking process (matching process) of a pitch sequence detected in the pitch detection unit 102 against melody data of each piece of music stored in the storage unit 104, and calculates matching degrees between the pitch sequence and the melody data of each piece of music.

Next, in step ST4, the sound processing device 100 displays, on the display unit 105, pieces of music as the target of the checking process in descending order of the matching degree based on information of the checking process information by the matching process unit 103. Next, in step ST5, the sound processing device 100 determines whether or not the greatest matching degree is greater than the threshold value Thh. When it is not greater, the sound processing device 100 proceeds to a process in step ST6.

In step ST6, the sound processing device 100 determines whether or not an end condition is satisfied. This end condition is, for example, whether or not a predetermined period of time has passed after a user starts to sing (including humming) or the like. When the end condition is not satisfied, the sound processing device 100 proceeds to a process in step ST7.

In step ST7, the sound processing device 100 removes pieces of music having matching degrees smaller than the threshold value Thl from the target of the next checking process. Then, the sound processing device 100 returns to the process in step ST3 immediately after the process in step ST7 and repeats the same above described processes.

Further, when the greatest matching degree among the pieces of music is greater than the threshold value Thh in step ST5, the sound processing device 100 determines that the piece of music having the greatest matching degree is the piece of music to be identified. Then, in step ST8, the sound processing device 100 starts, in the reproduction control unit 106, to reproduce the identified piece of music in synchronization with the input sound signals based on the information about the piece of music and the music part being sung. After the process in step ST8, the sound processing device 100 ends

### the process in step ST9.

Further, when the end condition is satisfied in step ST6, the sound processing device 100 ends the process in step ST9 after displaying a reproduction failure on the display unit 105 to notify the user in step ST10.

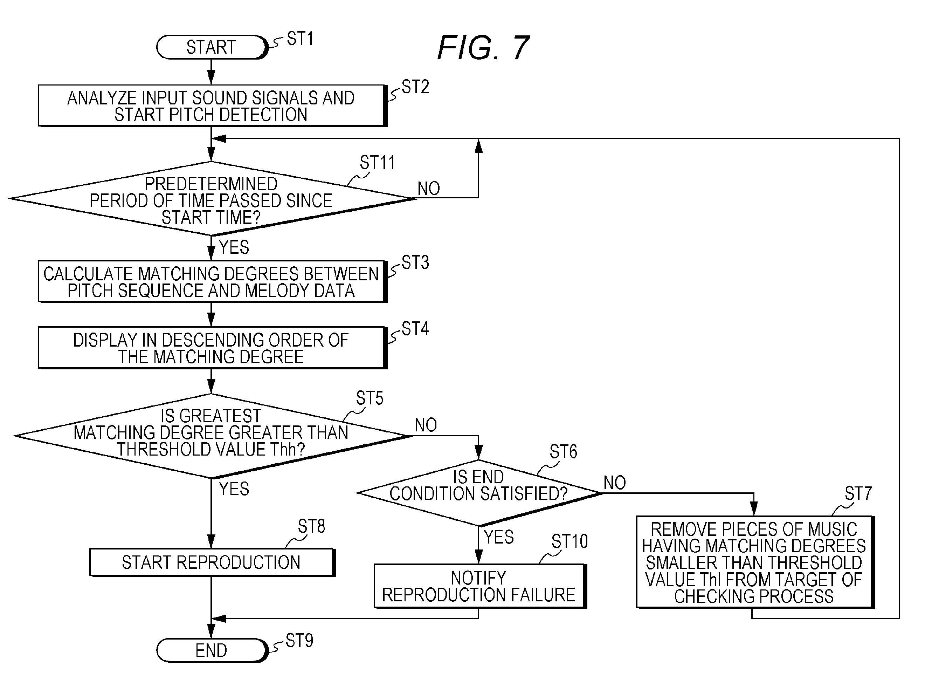

Next, with reference to a flowchart in Fig. 7, a case of executing the checking process at every scheduled time will be explained. The sound processing device 100 executes a process in step ST11 before the process in step ST3. In other words, after the process in step ST2 and the process in step ST7, the sound processing device 100 proceeds to the process in step ST11.

In step ST11, the sound processing device 100 determines whether or not a specified period of time has passed from the start time. When the first checking process is not started, the specified period of time is a period of time until the first checking process is started, and it is same in cases of the second and following checking processes. When the specified period of time has passed, the sound processing device 100 proceeds to the process in step ST3. Although detailed explanations are omitted, other steps in the flowchart of Fig. 7 are the same as those in the flowchart of Fig. 6.

As described above, in the sound processing device 100 illustrated in Fig. 1, a conversion of continuous input sound signal into a pitch sequence and an execution of a checking process of the pitch sequence against the melody data corresponding to pieces of music are performed in parallel. This enables a music identification with a great real-time ability. In other words, while a user is singing (including humming), a piece of music corresponding to the singing can be quickly identified. With this configuration, the user does not have to sing longer than a minimum period of time.

Further, in the sound processing device 100 illustrated in Fig. 1, while the checking process of the pitch sequence against the melody data corresponding to the pieces of music is repeated until the greatest matching degree becomes greater than the threshold value Thh, the pieces of music having matching degrees less than the threshold value Thl in a previous checking process are removed from the target of the checking process. Thus, the target of the checking process can be sequentially narrowed down as time passes and the music identification can be performed efficiently.

Further, in the sound processing device 100 illustrated in Fig. 1, the identified piece of music is reproduced in synchronization with the continuous input sound signals based on information about the piece of information and the music part being sung. Because this allows the user to continue to sing comfortably along the reproduced piece of music, an effective application can be provided.

Further, in the sound processing device 100 illustrated in Fig. 1, a progress state of the music identification is displayed on the display unit 105 based on the checking process information and music identification information in the matching process unit 103. For example, the pieces of music as the target of the checking process are displayed in descending order of the matching degree based on the process result. Thus, the user can easily see the progress state of the music identification and can easily find which piece of music is going to be identified.

Here, according to the above description, after the checking process, when the greatest matching degree is greater than the threshold value Thh, the piece of music having the matching degree is determined as the piece of music to be identified and the process proceeds to a reproduction of the piece of music. In other words, the description is about a case that the process proceeds to the reproduction of the piece of music after one piece of music is identified. However, the user may find the music that the user is singing in the pieces of music displayed in descending order of the matching degree on the display unit 105. It may be thus considered to allow the user to arbitrarily select the piece of music on the display of the display unit 105 and the process immediately proceeds to a reproduction of the selected piece of music.

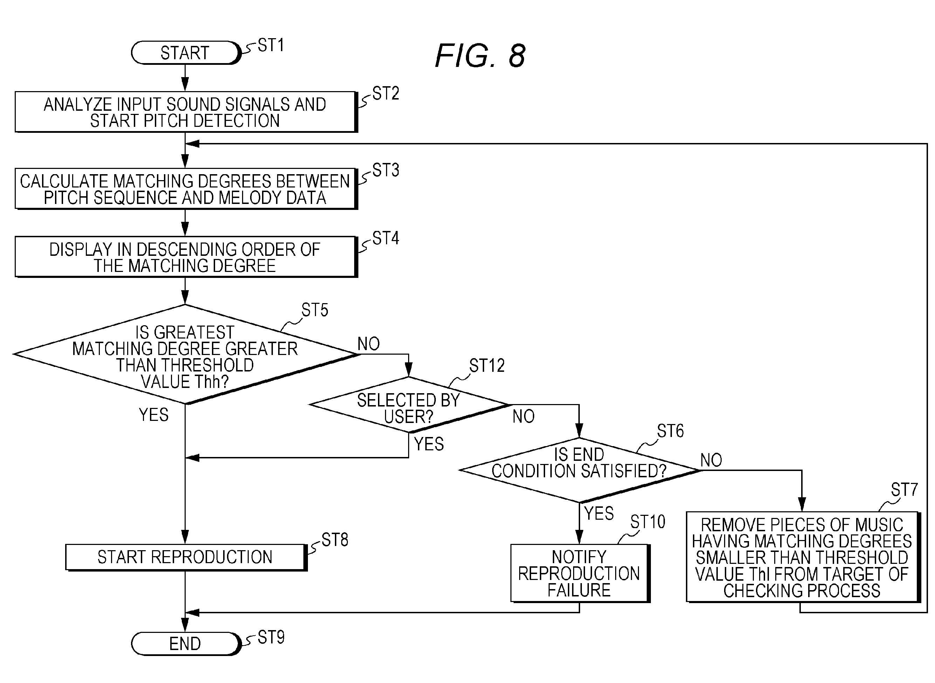

The flowchart of Fig. 8 illustrates an example of an operation of the sound processing device 100 in the above case. In the flowchart of Fig. 8, the steps corresponding to those in the flowchart of Fig. 6 are designated by the same reference number and detailed explanation will be omitted appropriately. In the flowchart of Fig. 8, when the greatest matching degree is not greater than the threshold value Thh in step ST5, the sound processing device 100 proceeds to a process in step ST12.

In step ST12, the sound processing device 100 determines whether or not one of the pieces of music displayed on the display unit 105 has been selected by the user. When a selection has been made, the sound processing device 100 proceeds to the process in step ST8 and starts to reproduce, in the reproduction control unit 106, the selected piece of music in synchronization with the input sound signals based on information about the piece of music and the music part being sung. On the other hand, when a selection has not been made in step ST12, the sound processing device 100 proceeds to the process in step ST6. Although detailed explanations are omitted, other steps in this flowchart of Fig. 8 are the same as those in the flowchart of Fig. 6.

### <2. Second embodiment>

### [Configuration example of sound processing system]

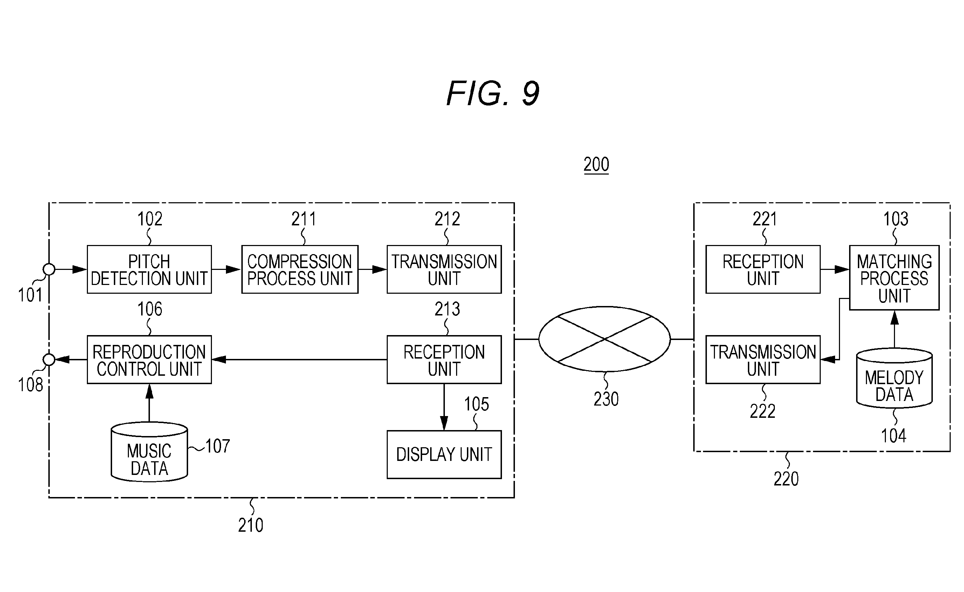

Fig. 9 illustrates a configuration example of a sound processing system 200 as a second embodiment. The sound processing system 200 is composed of a sound reproducing device 210 and a server device 220 which are connected via a network 230. Concretely, the sound reproducing device 210 includes a network connection function and is a portable music player, a mobile phone or the like which includes a microphone. In Fig. 9, the same reference numbers are applied to parts corresponding to those in Fig. 1 and detailed explanations thereof are arbitrarily omitted.

The sound reproducing device 210 includes an input unit 101, a pitch detection unit 202, a compression process unit 211, a transmission unit 212, a reception unit 213, a display unit 105, a reproduction control unit 106, a storage unit 107, and an output unit 108.

The input unit 101 inputs singing voice (including humming) of a user and outputs input sound signals (voice signals) corresponding to the singing voice. The input unit 101 is, for example, composed of a microphone or the like. The pitch detection unit 102 executes a frequency analysis of the input sound signals, estimates a basic frequency at every analysis time, and detects pitch.

The compression process unit 211 executes processes of a data compression and the like to transmit a pitch sequence detected in the pitch detection unit 102 to the server device 220. The transmission unit 212 transmits the pitch sequence to which the processes of a data compression and the like are performed to the server device 220 via the network 230. The reception unit 213 receives checking process information and music identification information transmitted from the server device 220 via the network 230. The music identification information includes information about a piece of music and a music part being sung.

The display unit 105 displays a progress state of a music identification based on the received checking process information and music identification information. On the display unit 105, pieces of music as the target of the checking process are displayed in descending order of the matching degree, for example. The reproduction control unit 106 reproduces an identified piece of music by using music data stored in the storage unit 107 in synchronization with the input sound signals based on the information about the piece of music and the music part being sung included in the received music identification information. In other words, the reproduction control unit 106 reproduces the identified piece of music along with the music part being sung by the user.

The output unit 108 is a part related to an output of the reproduction voice signal of the piece of music obtained in the reproduction control unit 106. The output unit 108 may output sound itself like a speaker or may be a terminal to be connected to headphones, or a communication unit for communicating with an external speaker.

The server device 220 includes a reception unit 221, a matching process unit 103, a storage unit 104, and a transmission unit 222. The reception unit 221 receives a pitch sequence to which a compression process or the like is executed from the sound reproducing device 210 via the network 230 and executes a decompression process or the like to obtain the pitch sequence which is the same as what is obtained in the pitch detection unit 102 of the sound reproducing device 210.

The matching process unit 103 executes a checking process (matching process) of the received pitch sequence against melody data of each piece of music stored in the storage unit 104 and calculates matching degrees between the pitch sequence and each piece of melody data. Further, the matching process unit 103 sequentially executes this checking process for every predetermined quantity of accumulated pitch sequence which is intermittently received from the sound reproducing device 210 and conclusively identifies a piece of music having the greatest matching degree which is greater than the predetermined threshold value Thh.

The transmission unit 222 transmits the checking process information and music identification information in the matching process unit 103 to the sound reproducing device 210 via the network 230. Here, the music identification information includes information about the piece of music and the music part being sung.

Operation of the sound processing system 200 illustrated in Fig. 9 will be explained. User's singing voice (including humming) is input to the input unit 101 and input sound signals (voice signals) corresponding to the singing voice are obtained from the input unit 101. The input voice signals are provided to the pitch detection unit 102. In the pitch detection unit 102, a frequency analysis is executed on the input sound signals, a basic frequency is estimated at every analysis time, and pitch is detected.

The pitch sequence obtained in the pitch detection unit 102 is provided to the compression process unit 211. In the compression process unit 211, when a predetermined quantity of pitch sequence is accumulated, a data compression is sequentially executed and then the transmission unit 212 transmits the data to the server device 220 via the network 230.

In the server device 220, the reception unit 221 receives the pitch sequence transmitted from the sound reproducing device 210. The pitch sequence is provided to the matching process unit 103.

In the matching process unit 103, a checking process (matching process) of the received pitch sequence against the melody data of each piece of music stored in the storage unit 104 is executed and matching degrees between the pitch sequence and the melody data of each piece of music are calculated. In the matching process unit 103, the checking process is sequentially executed for every predetermined quantity of pitch sequence which is intermittently received from the sound reproducing device 210 and accumulated. Then, in the matching process unit 103, a piece of music having the greatest matching degree which is greater than a predetermined threshold value Thh is conclusively identified.

The checking process information and music identification information obtained in the matching process unit 103 are transmitted by the transmission unit 222 to the sound reproducing device 210 via the network 230. In the sound reproducing device 210, the reception unit 213 receives the checking process information and music identification information which are late from the server device 220.

On the display unit 105, a progress state of the music identification is displayed based on the received checking process information and music identification information (see Fig. 5). Further, in the reproduction control unit 106, the identified piece of music is reproduced by using the music data stored in the storage unit 107 in synchronization with the input sound signals based on the information about the piece of music and the music part being sung included in the received music identification information. In other words, in the reproduction control unit 106, the identified piece of music is reproduced in synchronization with the music part being sung by the user. The reproduction voice signals of the piece of music obtained in the reproduction control unit 106 are provided to the output unit 108.

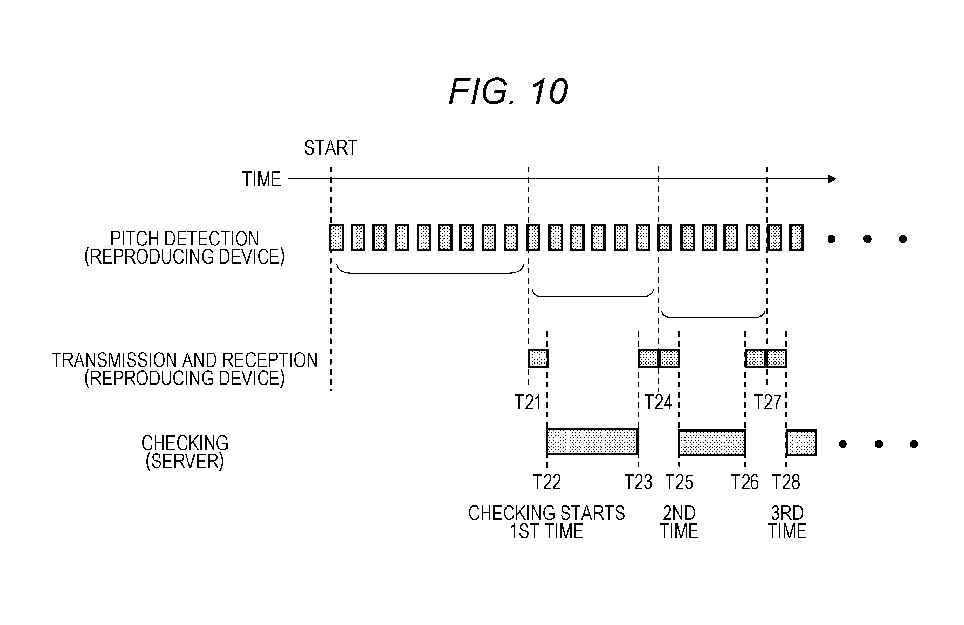

A timing diagram of Fig. 10 illustrates timings of processes of detecting pitch, transmitting, receiving, and checking in the sound processing system 200 of Fig. 9. In the pitch detection unit 102 of the sound reproducing device 210, a pitch detection of input sound signals is sequentially executed from the start time. At time T21 when a predetermined period of time passed after the start time, a data compression is executed on the pitch sequence from the start time to time T21 and the data is transmitted from the transmission unit 212 to the server device 220.

In the server device 220, the matching process unit 103 starts a first checking process at time T22 after the pitch sequence is received from the sound reproducing device 210. The first checking process is executed based on the pitch sequence accumulated from the start time to time T21. After this checking process ends, the checking process information is transmitted from the transmission unit 222 to the sound reproducing device 210 at time T23.

Further, in the sound reproducing device 210, at time T24 after the checking process information is received from the server device 220, a data compression is executed on the pitch sequence from time T21 to time T24 and the data is transmitted from the transmission unit 212 to the server device 220.

In the server device 220, at time T25 after a pitch sequence is received from the sound reproducing device 210, the matching process unit 103 starts a second checking process. The second checking process is executed based on the pitch sequence accumulated from time T21 to time T24. After this checking process ends, at time T26, the checking process information is transmitted from the transmission unit 222 to the sound reproducing device 210.

Further, in the sound reproducing device 210, at time T27 after the checking process information is received from the server device 220, a data compression is executed on the pitch sequence from time T24 to time T27 and the data is transmitted from the transmission unit 212 to the server device 220. In the server device 220, at time T28 after a pitch sequence is received from the sound reproducing device 210, the matching process unit 103 starts a third checking process. After that, the respective processes are repeated in the same manner.

As described above, the sound processing system 200 illustrated in Fig. 9 generally has the same configuration as the sound processing device 100 illustrated in Fig. 1 although the matching process unit 103 is provided in the server device 220. It thus can provide the same effects as the sound processing device 100 illustrated in Fig. 1.

Further, in the sound processing system 200 illustrated in Fig. 9, the matching process unit 103 is provided in the server device 220 and the checking process (matching process) is executed in the server device 220 which can improve the ability of processing. The processing load of the sound reproducing device 210 can be reduced, and the checking process time can be also shortened.

Here, in the sound processing system 200 illustrated in Fig. 9, the pitch detection unit 102 is provided in the sound reproducing device 210; however, the pitch detection unit 102 may be also provided in the server device 220. In this case, the input sound signal is transmitted from the sound reproducing device 210 to the server device 220.

Further, in the sound processing system 200 illustrated in Fig. 9, the reproduction control unit 106 is provided in the sound reproducing device 210; however, it may be considered that the reproduction control unit 106 and the storage unit 107 are provided in the server device 220. In this case, the reproduction voice signals of the identified piece of music are transmitted from the server device 220 to the sound signal reproducing device 210.

### <3. Modification>

Here, in the above described embodiment, it has been explained that the user's singing voice (including humming) is input to the input unit 101. However, environmental sound may be input to the input unit 101. The environmental sound here is, for example, a piece of music played in the street or the like. In this case, a piece of music corresponding to the environmental sound also can be identified and the identified environmental sound can be reproduced in synchronization with the environmental sound.

Further, in the above described embodiments, the pitch sequence has been described as an example of a predetermined characteristic amount sequence; however, the present technology is not limited to this example. The predetermined characteristic amount sequence may be other characteristic amount sequences such as a phonemic sequence or the like.

Further, the present technology may also have the following configuration.
(1) A sound processing device including:
   a converting unit configured to convert continuous input sound signals into a predetermined characteristic amount sequence; and
   a music identifying unit configured to sequentially execute a checking process of the characteristic amount sequence against music information when a predetermined quantity of the predetermined characteristic amount sequence is accumulated, and identify a piece of music having a matching degree greater than a first threshold value.
(2) The sound processing device according to (1), further including a music reproducing unit configured to reproduce the identified piece of music in synchronization with the continuous input sound signals based on information about the piece of music and a music part being sung.
(3) The sound processing device according to (1) or (2), wherein the music identifying unit removes, from a target of the checking process, a piece of music having a matching degree in a previous checking process smaller than a second threshold value which is set lower than the first threshold value.
(4) The sound processing device according to (3), wherein the music identifying unit changes the first threshold value and/or the second threshold value larger as time passes.
(5) The sound processing device according to (2), wherein the music reproducing unit changes pitch and a pace of the reproduced piece of music corresponding to pitch and a pace of the continuous input sound signals.
(6) The sound processing device according to any of (1) to (5), further including a display control unit configured to control a display of a music identification progress state based on information of the checking process and information of the music identification.
(7) The sound processing device according to (6), wherein the display control unit controls to display pieces of music as a target of the checking process in a descending order of the matching degree based on a process result.
(8) The sound processing device according to (7), further including a music reproducing unit configured to reproduce a piece of music selected from the displayed pieces of music in synchronization with the continuous input sound signals based on information about the piece of music and a music part being sung.
(9) The sound processing device according to any of (1) to (8), wherein the music identifying unit executes the checking process at every scheduled time.
(10) The sound processing device according to (1) to (8), wherein the music identifying unit executes the checking process every time a previous checking process ends.
(11) The sound processing device according to any of (1) to (10), further including a music narrow-down unit configured to select some pieces of music from plural pieces of music to which a predetermined sorting is executed,
   wherein the music identifying unit targets the some pieces of music, which are selected in the music narrow-down unit, in the checking process.
(12) The sound processing device according to (11), wherein the predetermined sorting is sorting corresponding to a user's preference.
(13) A sound processing method, including:
   converting continuous input sound signals into a predetermined characteristic amount sequence; and
   sequentially executing a checking process of the characteristic amount sequence against music information when a predetermined quantity of the predetermined characteristic amount sequence is accumulated, and identifying a piece of music having a matching degree greater than a threshold value.
(14) A program that causes a computer to execute a sound processing method including:
   converting continuous input sound signals into a predetermined characteristic amount sequence; and
   sequentially executing a checking process of characteristic amount sequence against music information when a predetermined quantity of the predetermined characteristic amount sequence is accumulated, and identifying a piece of music having a matching degree greater than a threshold value.
(15) A recording medium, which is readable by a computer and stores a program that causes a computer to execute a sound processing method including:
   converting continuous input sound signals into a predetermined characteristic amount sequence; and
   sequentially executing a checking process of the characteristic amount sequence against music information when a predetermined quantity of the predetermined characteristic amount sequence is accumulated, and identifying a piece of music having a matching degree greater than a threshold value.
(16) A server device including:
   a reception unit configured to receive, from an external device, a predetermined characteristic amount sequence obtained by converting continuous input sound signals;
   a music identifying unit configured to sequentially execute a checking process of the characteristic amount sequence against music information when a predetermined quantity of the characteristic amount sequence is accumulated, and identify a piece of music having a matching degree greater than a threshold value; and
   a transmission unit configured to transmit information of the music identification information to the external device.
(17) A sound reproducing device including:
   a converting unit configured to convert continuous input sound signals into a predetermined characteristic amount sequence;
   a transmission unit configured to transmit the predetermined characteristic amount sequence to an external device;
   a reception unit configured to receive music identification information, from the external device, obtained by sequentially executing a checking process of the characteristic amount sequence against music information when a predetermined quantity of the predetermined characteristic amount sequence is accumulated and identifying a piece of music having a matching degree greater than a threshold value; and
   a music reproducing unit configured to reproduce the identified piece of music in synchronization with the continuous input sound signals based on the music identification information. (18) A sound processing system including a sound reproducing device and a server device which are connected via a network, wherein
   the sound reproducing device including:
   a converting unit configured to convert continuous input sound signals into a predetermined characteristic amount sequence;
   a transmission unit configured to transmit the predetermined characteristic amount sequence to the server device;
   a reception unit configured to receive music identification information from the server device; and
   a music reproducing unit configured to reproduce the identified piece of music in synchronization with the continuous input sound signals based on the music identification information, and
   the server device including:
   a reception unit configured to receive the predetermined characteristic amount sequence from the sound reproducing device;
   a music identifying unit configured to sequentially execute a checking process of characteristic amount sequence against music information when a predetermined quantity of the predetermined characteristic amount sequence is accumulated, and identify a piece of music having a matching degree greater than a threshold value; and
   a transmission unit configured to transmit the music identification information to the sound reproducing device. (19) A sound processing device including:
   a converting unit configured to convert continuous input sound signals into a predetermined characteristic amount sequence;
   a music identifying unit configured to sequentially execute a checking process of the characteristic amount sequence against music information when a predetermined quantity of the predetermined characteristic amount sequence is accumulated, and identify a piece of music having a matching degree greater than a threshold value; and
   a music reproducing unit configured to reproduce the identified piece of music in synchronization with the continuous input sound signals based on information about the piece of music and a music part being sung.

### REFERENCE SIGNS LIST

- 100: sound processing device
- 101: input unit
- 102: pitch detection unit
- 103: matching process unit
- 104, 107: storage unit
- 105: display unit
- 106: reproduction control unit
- 108: output unit
- 200: sound processing system
- 210: sound reproducing device
- 211: compression process unit
- 212: transmission unit
- 213: reception unit
- 220: server device
- 221: reception unit
- 222: transmission unit
- 230: network

## Claims

1. A sound processing device comprising:
a converting unit configured to convert continuous input sound signals into a predetermined characteristic amount sequence; and
a music identifying unit configured to sequentially execute a checking process of the characteristic amount sequence against music information when a predetermined quantity of the predetermined characteristic amount sequence is accumulated, and identify a piece of music having a matching degree greater than a first threshold value.

2. The sound processing device according to claim 1, further comprising a music reproducing unit configured to reproduce the identified piece of music in synchronization with the continuous input sound signals based on information about the piece of music and a music part being sung.

3. The sound processing device according to claim 1, wherein the music identifying unit removes, from a target of the checking process, a piece of music having a matching degree in a previous checking process smaller than a second threshold value which is set lower than the first threshold value.

4. The sound processing device according to claim 3, wherein the music identifying unit changes the first threshold value and/or the second threshold value larger as time passes.

5. The sound processing device according to claim 2, wherein the music reproducing unit changes pitch and a pace of the reproduced piece of music corresponding to pitch and a pace of the continuous input sound signals.

6. The sound processing device according to claim 1, further comprising a display control unit configured to control a display of a music identification progress state based on information of the checking process and information of the music identification.

7. The sound processing device according to claim 6, wherein the display control unit controls to display pieces of music as a target of the checking process in a descending order of the matching degree based on a process result.

8. The sound processing device according to claim 7, further comprising a music reproducing unit configured to reproduce a piece of music selected from the displayed pieces of music in synchronization with the continuous input sound signals based on information about the piece of music and a music part being sung.

9. The sound processing device according to claim 1, wherein the music identifying unit executes the checking process at every scheduled time.

10. The sound processing device according to claim 1, wherein the music identifying unit executes the checking process every time a previous checking process ends.

11. The sound processing device according to claim 1, further comprising a music narrow-down unit configured to select some pieces of music from plural pieces of music to which a predetermined sorting is executed,
wherein the music identifying unit targets the some pieces of music, which are selected in the music narrow-down unit, in the checking process.

12. The sound processing device according to claim 11, wherein the predetermined sorting is sorting corresponding to a user's preference.

13. A sound processing method, comprising:
converting continuous input sound signals into a predetermined characteristic amount sequence; and
sequentially executing a checking process of the characteristic amount sequence against music information when a predetermined quantity of the predetermined characteristic amount sequence is accumulated, and identifying a piece of music having a matching degree greater than a threshold value.

14. A program that causes a computer to execute a sound processing method comprising:
converting continuous input sound signals into a predetermined characteristic amount sequence; and
sequentially executing a checking process of the characteristic amount sequence against music information when a predetermined quantity of the predetermined characteristic amount sequence is accumulated, and identifying a piece of music having a matching degree greater than a threshold value.

15. A recording medium, which is readable by a computer and stores a program that causes a computer to execute a sound processing method comprising:
converting continuous input sound signals into a predetermined characteristic amount sequence; and
sequentially executing a checking process of the characteristic amount sequence against music information when a predetermined quantity of the predetermined characteristic amount sequence is accumulated, and identifying a piece of music having a matching degree greater than a threshold value.

16. A server device comprising:
a reception unit configured to receive, from an external device, a predetermined characteristic amount sequence obtained by converting continuous input sound signals;
a music identifying unit configured to sequentially execute a checking process of the characteristic amount sequence against music information when a predetermined quantity of the characteristic amount sequence is accumulated, and identify a piece of music having a matching degree greater than a threshold value; and
a transmission unit configured to transmit information of the music identification information to the external device.

17. A sound reproducing device comprising:
a converting unit configured to convert continuous input sound signals into a predetermined characteristic amount sequence;
a transmission unit configured to transmit the predetermined characteristic amount sequence to an external device;
a reception unit configured to receive music identification information, from the external device, obtained by sequentially executing a checking process of the characteristic amount sequence against music information when a predetermined quantity of the predetermined characteristic amount sequence is accumulated and identifying a piece of music having a matching degree greater than a threshold value; and
a music reproducing unit configured to reproduce the identified piece of music in synchronization with the continuous input sound signals based on the music identification information.

18. A sound processing system comprising a sound reproducing device and a server device which are connected via a network, wherein
the sound reproducing device comprising:
a converting unit configured to convert continuous input sound signals into a predetermined characteristic amount sequence;
a transmission unit configured to transmit the predetermined characteristic amount sequence to the server device;
a reception unit configured to receive music identification information from the server device; and
a music reproducing unit configured to reproduce the identified piece of music in synchronization with the continuous input sound signals based on the music identification information, and
the server device comprising:
a reception unit configured to receive the predetermined characteristic amount sequence from the sound reproducing device;
a music identifying unit configured to sequentially execute a checking process of characteristic amount sequence against music information when a predetermined quantity of the predetermined characteristic amount sequence is accumulated, and identify a piece of music having a matching degree greater than a threshold value; and
a transmission unit configured to transmit the music identification information to the sound reproducing device.

19. A sound processing device comprising:
a converting unit configured to convert continuous input sound signals into a predetermined characteristic amount sequence;
a music identifying unit configured to sequentially execute a checking process of the characteristic amount sequence against music information when a predetermined quantity of the predetermined characteristic amount sequence is accumulated, and identify a piece of music having a matching degree greater than a threshold value; and
a music reproducing unit configured to reproduce the identified piece of music in synchronization with the continuous input sound signals based on information about the piece of music and a music part being sung.
